# EUROPEAN PATENT APPLICATION

(11) **EP 4 800 560 A1**
(43) Date of publication of application: **02.09.2026**
(21) Application number: 25161021.8
(22) Date of filing: 28.02.2025
(51) Int. Cl.: G06F 11/30, G06F 11/34, G06F 21/64

(54) **METHOD FOR OBTAINING DIAGNOSTIC DATA IN A DISTRIBUTED CONTROL SYSTEM**

(71) Applicant: ABB SCHWEIZ AG, 5400 Baden (CH)
(72) Inventor: KOZIOLEK, Heiko, 76227 Karlsruhe (DE); DAWOUD, Abdallah, 66121 Saarbrücken (DE); YUSSUPOV, Vladimir, 68163 Mannheim (DE); HARK, Rhaban, 64347 Griesheim (DE)
(74) Representative: Maiwald GmbH

(57) **Abstract**

The disclosure relates to a method (100) for obtaining diagnostic data in a distributed control system, DCS, the method comprising:
- (S 102) obtaining issue data, wherein the issue data is indicative of a system anomaly or fault;
- (S 104) processing the obtained issue data to determine diagnostic requirements;
- (S 106) identifying a kernel-instrumenting bytecode data, kiBD (41), based on the determined diagnostic requirements;
- (S 108) loading and activating the identified kiBD (41), wherein activation comprises linking the kiBD (41) to a system hook; and
- (S 110) obtaining diagnostic data using the activated kiBD (41).

## Description

### TECHNICAL FIELD

The present invention relates to a method for obtaining diagnostic data in a distributed control system, DCS, one or more computer program products, and a data processing system.

### BACKGROUND

Distributed control systems (DCS) are integral to modern industrial automation and typically comprise multiple interconnected services responsible for process control, supervisory management, and data acquisition. In these environments, diagnosing system anomalies or faults poses significant challenges. Conventional diagnostic approaches, e.g., such as logging CPU events or container logs, often do not capture fine-granular diagnostic data required to accurately analyze complex issues.

In many cases, merely obtaining issue data that is indicative of a system anomaly or fault may be insufficient for effective troubleshooting. A comprehensive diagnostic process ideally involves not only obtaining such issue data but also processing it to determine precise diagnostic requirements, for example. This diagnostic data may provide detailed insights into the system's behavior at a low level. For example, to fully understand a fault, it may be necessary to capture specific events such as network communications, file system activities, and user authentication events.

Achieving this level of detail typically requires instrumentation at the kernel level. However, continuously activating fine-granular diagnostics for monitoring purposes can impose significant overhead on the system. For example, continuous instrumentation, if implemented without restriction, can lead to excessive consumption of CPU and memory resources, thereby adversely affecting the performance and stability of the production system. As a result, there is an inherent trade-off between the need for detailed diagnostic data and the imperative to preserve system resources.

Thus, there exists a significant challenge in the field of how to obtain detailed, fine-granular diagnostic data required for effective fault analysis in DCS while simultaneously ensuring that system performance is not compromised by excessive resource consumption.

### SUMMARY

The above problem or need is at least partially solved or alleviated by the subject matters of the independent claims of the present disclosure, wherein further examples are incorporated in the dependent claims.

According to an aspect of the present disclosure, there is provided a method for obtaining diagnostic data in a distributed control system, DCS, the method comprising:
- obtaining issue data, wherein the issue data is indicative of a system anomaly or fault;
- processing the obtained issue data to determine diagnostic requirements;
- identifying a kernel-instrumenting bytecode data, kiBD, based on the determined diagnostic requirements;
- loading and activating the identified kiBD, wherein activation comprises linking the kiBD to a system hook; and
- obtaining diagnostic data using the activated kiBD.

Diagnostic data in a DCS may refer to detailed, fine-granular information collected from various components and processes within the system to facilitate effective troubleshooting and fault analysis, for example.

The term "kernel-instrumenting bytecode data" (kiBD) may refer to any form of kernel-level code that can be introduced into an operating system kernel to capture, manipulate, or monitor system events, for example. In the context of this invention, kiBD broadly encompasses mechanisms such as eBPF (extended Berkeley Packet Filters) code or comparable methods that enable fine-grained diagnostics without requiring modifications to the kernel itself. Thus, kiBD may represent code that can be loaded as bytecode into the kernel's execution environment.

The kiBD may comprise a two-part architecture, a kernel-space component and a user-space component. The kernel-space component may be responsible for the direct collection of system events (e.g., monitoring network events, file system operations, or user authentication activities). The user-space component may handle analytical tasks, filtering, or visualization of the collected diagnostic data. Communication between these two components is achieved via mechanisms like eBPF maps, which serve as data exchange buffers between the kernel and user spaces.

The example kiBD programs described herein are tailored for the industrial automation domain and distributed control systems (DCS). Although these programs are designed with DCS-specific diagnostics in mind, they are not limited to any single production facility. Instead, they may be employed in any DCS that incorporates the relevant technologies (such as OPC UA or IEC 61131-3).

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

Obtaining issue data may refer to a process of collecting information or signals from the distributed control system (DCS) that suggest the presence of an abnormal condition or malfunction, for example. This issue data may originate from various sources, such as, system logs, e.g., automated logs generated by system components that record errors, warnings, or unexpected behaviors, or alerts or notifications, such as signals triggered by monitoring tools or the DCS itself when certain thresholds or conditions are met, or telemetry and metrics such as performance data and statistics that deviate from expected values, indicating potential faults. Issue data may also be in the form of direct input from a system operator or administrator who observe irregularities or performance issues, for example.

The issue data, which is indicative of a system anomaly or fault, may be processed in order to establish specific diagnostic parameters and needs required for effective troubleshooting, for example. This may comprise data analysis and correlation, where the obtained issue data is examined to identify patterns, inconsistencies, or deviations from normal system behavior, for example. This analysis may involve processes such as bit not limited to filtering out noise and correlating data points from various sources (e.g., logs, telemetry, alerts) to gain a comprehensive view of the anomaly, for example. By processing the issue data, it may be determined which specific components (such as network modules, file systems, or authentication services) exhibit abnormal behavior, for example. This identification may be important for narrowing down the diagnostic focus to areas that are most likely contributing to the fault. Based on the analysis, the diagnostic requirements are defined. This may mean e.g., determining which types of system events need to be captured (e.g., network traffic details, file access patterns, or user authentication events), or determining the level of granularity required for capturing these events to adequately isolate and understand the fault, for example.

The processed issue data may be used to select an appropriate diagnostic tool, in this context, a specific kernel-instrumenting bytecode data (kiBD), that can capture the necessary detailed information. This mapping may ensure that subsequent diagnostic actions are precisely tailored to the nature of the detected anomaly, for example.

The kiBD, which may be in a form of diagnostic code (e.g., eBPF code or a similar bytecode mechanism), is loaded into an operating system's kernel. This may be performed at runtime without modifying the kernel's source code, for example. Activation may involve connecting the loaded kiBD to a specific system hook. System hooks are predefined points in the kernel where events occur, such as network events, file system operations, or user authentication processes. The linking process may be accomplished e.g., using a kernel-level hooking mechanism. This mechanism may ensure that when a particular event occurs at the hooked point, the kiBD is triggered to capture or manipulate the event data, for example. By linking the kiBD to a specific system hook, the diagnostic system may ensure that only relevant events (as determined by the diagnostic requirements) are monitored. This targeted approach may prevent unnecessary performance overhead and ensures that the diagnostic data collected is precise and relevant to the detected anomaly or fault.

As the hooked events occur, the kiBD may be triggered, allowing it to capture e.g., detailed, low-level information about these events directly within the kernel space. The collected diagnostic data may e.g., serve as a foundation for subsequent steps in the diagnostic process, such as filtering, visualization, and anomaly detection, thereby enabling effective troubleshooting and fault analysis.

In an example, loading and activating the identified kiBD may comprise verifying the integrity and compatibility of the kiBD. This verification may ensure that the kiBD has not been tampered with or altered by employing security measures, such as cryptographic signature validation, which confirms that the diagnostic code remains in its original, intended state. In addition, the kiBD may be evaluated for compatibility with the target operating system kernel by checking that it aligns with the specific kernel version and configuration. Additional measures may include assessing memory usage, performance overhead, and other resource-related parameters, ensuring that the kiBD will not adversely impact system stability or performance when activated, for example. These measures may not only prevent the execution of potentially corrupted or malicious code but also may ensure that the activation of the kiBD does not compromise the stability or performance of the distributed control system, thereby contributing to a secure and reliable diagnostic process.

In an example, the kiBD may be just-in-time, JIT, compiled prior to being linked to the system hook. Kernel instrumentation code, such as eBPF programs or other bytecode forms, can be executed either by being interpreted within the kernel or, if supported, by being translated into native machine code. JIT compilation transforms the bytecode into native code, allowing it to run directly on the processor rather than through an interpreter loop. This direct execution may result in performance optimization, ensuring that diagnostic operations are executed with minimal delay and maximal efficiency. Additionally, because the kiBD is initially developed as bytecode, it maintains a high degree of flexibility. The bytecode is largely independent of any specific system configuration, meaning that it can be deployed across various DCS environments. The adaptation to the specific target architecture or kernel version may occur during the JIT compilation process at load time. This dynamic adjustment may facilitate the distribution and deployment of diagnostic tools in heterogeneous environments without requiring multiple code versions for different systems. The JIT compilation may be executed after verification phase before execution. Only after passing these verification checks the kiBD may be JIT compiled and linked to the appropriate system hook, thereby ensuring that only safe and verified code is executed within the kernel. The JIT compilation process may further contribute to a low latency between the on-demand loading of the diagnostic tool and its active deployment. The rapid compilation and immediate execution of the native code may reduce the time window for activation, which is especially critical in real-time or high-availability industrial automation environments. This may ensure that any system anomalies or faults are addressed as quickly as possible, facilitating prompt and effective troubleshooting.

In an example, the kiBD may be selectively linked to system hooks that are relevant to the identified diagnostic requirements or needs. Identified diagnostic needs may refer to specific types of diagnostic data required to effectively analyze and troubleshoot a system anomaly or fault. These needs are determined by processing the obtained issue data, which highlights deviations from normal system behavior. Based on these identified diagnostic needs, the kiBD may be selectively linked to system hooks that are directly relevant to the required diagnostic information. For instance, the kiBD may be linked to network event hooks to capture detailed information about network traffic, to file system hooks for monitoring file access and modifications, or to user authentication hooks to track login activities and potential security breaches. In addition to these general-purpose hooks, the diagnostic needs in industrial automation environments may further necessitate capturing domain-specific data. For example, binding the kiBD to hooks that monitor OPC UA communications may enable to capture fine-grained network events related to the exchange of operational data, ensuring that any anomalies in these communications are promptly identified. Similarly, linking the kiBD to hooks associated with PLC functions, such as those monitoring the execution of IEC 61131-3 compliant control runtimes, may allow for precise tracking of function call timings, state changes, and performance metrics, for example. This targeted instrumentation may ensure that only the pertinent diagnostic data is collected, which is crucial for rapid and accurate fault analysis in distributed control systems.

In an example, the method may further comprise storing the obtained diagnostic data in a kiBD map. This kiBD map may serve as a centralized repository within the kernel environment to organize and retain the detailed diagnostic information captured by the activated kiBD. For example, when the kiBD is loaded and attached to specific system hooks, it may intercept relevant system events, such as network packets, file operations, or user authentication events, and writes the associated diagnostic data into this kiBD map. The kiBD map may be maintained within the kernel and thus offers fast, low-latency access to the captured data. Once the diagnostic data is stored in the kiBD map, other components of the diagnostics assistant, such as the event monitor, can retrieve and process this information. The event monitor might either have the diagnostic data pushed to it in real time or periodically poll the kiBD map for new events, for example.

In an example, the kiBD map may be keyed by one or more identifiers. These identifiers may comprise at least one or more of a process ID, thread ID, timestamp, or network connection ID. For example, a process ID or thread ID may help determining which specific process or thread generated a particular diagnostic event. A timestamp may record the exact time when the event occurred, allowing for chronological correlation of events. Additionally, a network connection ID can be used to associate diagnostic data with specific network sessions or communications. By keying the kiBD map with these identifiers, the system can efficiently store, retrieve, and analyze the collected diagnostic data, ensuring that each piece of data is contextually linked to the corresponding system event. This may facilitate rapid fault identification and targeted troubleshooting within distributed control systems.

In an example, the obtained diagnostic data may be further analyzed using predefined algorithms. Predefined algorithms may be applied to the diagnostic data stored in the kiBD map to detect any deviations from normal behavior. These algorithms might use threshold comparisons, statistical analysis, pattern recognition, or even machine learning techniques to identify specific signs of system anomalies, performance degradation, or potential security breaches. These algorithms may use use threshold comparisons, statistical analysis, pattern recognition, or machine learning techniques to identify specific signs of system anomalies, performance degradation, or potential security breaches, for example. For example, the algorithms may flag unusual network traffic patterns that could indicate a security threat, identify timing irregularities in process execution that suggest performance issues, or detect unexpected behaviors in system logs that hint at underlying anomalies.

In an example, the method may be automatically initiated in response to detecting a system anomaly or upon receiving a system-generated alert. This may mean that rather than requiring manual intervention to begin the diagnostic process, the system continuously monitors for irregularities or predefined alert conditions. When such an anomaly is detected, such as unusual performance metrics, error conditions, or security-related events, the system itself triggers the diagnostic process. Similarly, if a system-generated alert is raised (for example, through automated monitoring tools), this may serves a signal to start gathering and analyzing diagnostic data. This automated initiation may ensure a rapid response to potential issues, minimizing the delay between the occurrence of a fault and the commencement of the diagnostic procedure.

In an example, the method may further comprise deactivating and unloading the kiBD after obtaining the diagnostic data. This step may be important to ensure that once the necessary information has been collected, the diagnostic instrumentation does not continue to consume system resources unnecessarily. In essence, deactivation and unloading may return the system to its normal operational state, preserving CPU and memory resources for ongoing and future processes. For example, once sufficient diagnostic data has been obtained, the kiBD may be deactivated. This deactivation may involve detaching the kiBD from its associated system hooks (which might be monitoring network events, file system operations, user authentication, or even domain-specific functions such as OPC UA and PLC operations). By doing so, the kiBD may stop collecting further diagnostic data. This targeted shutdown of the instrumentation may be beneficial in environments like distributed control systems (DCS), where resources are often limited and are needed to support time-critical automation processes. Following deactivation, the kiBD may be unloaded from the kernel's execution environment. This removal process may clear the loaded bytecode from memory, thereby freeing all resources allocated to it, for example. Unloading may ensure that there is no residual overhead from the diagnostic tool, which could otherwise negatively impact system performance. In summary, deactivating and unloading the kiBD after obtaining diagnostic data may stop further unnecessary data collection and frees up system resources.

In an example, deactivating and unloading the kiBD maybe triggered automatically after a predetermined time period, or upon completion of the diagnostic process, or after receiving a manual user request. For instance, a separate thread or timing mechanism may be employed to track the duration for which the diagnostic instrumentation has been active. A predefined time period can be set to ensure that the kiBD is only active long enough to capture the necessary diagnostic data without overburdening the system. In addition to or instead of a fixed time period, it may be detected when the diagnostic process has reached its objective. This might be e.g., when enough diagnostic data has been successfully stored in the kiBD map and has been processed. Upon recognizing that the required diagnostic information is complete, the deactivation and unloading process may be automatically triggered. These diagnostic programs may be loaded and unloaded at specific intervals, for instance, during off-peak hours or maintenance windows, thus further optimizing resource usage.

In an example, identifying the kiBD is performed using a machine learning model. Instead of relying on predefined rules or manual operator input, incoming fault or anomaly data, such as error logs, operator reports, or automatically generated alarms, may be interpreted through a machine learning model, such as a neural network or a large language model, thus enabling an automated and more precise determination of which kiBD program should be activated. Once the model recognizes the relevant category of system anomaly (for example, a network latency issue, a memory leak, or a security breach), it may automatically suggest the specific kiBD program that will most effectively gather the needed data, for example. For example, if a distributed control system receives frequent error logs referencing unstable OPC UA connections, the machine learning model may parse the textual descriptions and classification metrics to identify that the likely cause involves network congestion or protocol-specific issues. In response, the model may suggest a specialized network monitoring kiBD that targets OPC UA-related sockets and traces the appropriate TCP/UDP events in the kernel, for example. The machine learning model may be trained on historical data or simulation scenarios reflecting a range of fault types, such as CPU bottlenecks, memory leaks, or unauthorized file accesses, for example. This may reduce the risk of human error, improves response times for critical issues, and allows operators to focus on interpreting the diagnostic results rather than sifting through potential solutions. Ultimately, this approach may leverage data-driven insights to optimize the on-demand selection of kiBD, enhancing both the accuracy and efficiency of diagnosing anomalies in large-scale distributed control systems.

In an example, the method may further comprise linking a user-space component of the kiBD to at least one user application in the DCS. In some embodiments not only kernel-level instrumentation may be employed through a kernel-instrumenting bytecode data (kiBD), but a user-space component of the kiBD may be implemented. This user-space component e.g., may be linked to at least one user application or service within the distributed control system (DCS). For example, a DCS may incorporate human-machine interface (HMI) software, asset management services, or specialized control applications for executing IEC 61131-3 logic. Through the user-space kiBD component, these applications may be hooked at predefined function boundaries (e.g., library calls, service entry points, or communication APIs), capturing detailed context that may not appear in a purely kernel-level trace, for example. Relevant diagnostic or security-related information may then be correlated with kernel events, particularly helpful in scenarios where an application-level bug or misconfiguration triggers anomalous behavior at the operating system level. Furthermore, linking a user-space component may ensures that domain-specific logic, like OPC UA protocol handlers or advanced application-level operations, can be monitored in detail. The user-space hooks may detect irregular function parameters, unauthorized configuration changes, or performance bottlenecks that manifest within the application rather than the kernel. By aggregating these user-space observations with kernel-level data (for instance, in a shared map or via inter-process communication), a holistic view of the operational state may be provided.

In an example, the method may further comprise enforcing one or more security policies derived from IEC 62443 guidelines by means of the activated kiBD. This means, that kiBD hooks do not merely collect diagnostic data, they may also enforce security policies. For example, the kiBD may be said to monitor kernel-level events, such as network packets, system calls, or file access operations. Then the kiBD may compare each monitored event against a defined set of IEC 62443-derived security rules, and selectively allows, blocks, or alerts on events that violate said security rules, thereby preventing unauthorized operations or abnormal system behavior in the distributed control system.

According to a second aspect of this disclosure, there are provided one or more computer program products comprising instructions which, when executed by one or more data processing apparatuses, cause the one or more data processing apparatuses to carry out the method of the first aspect of this disclosure. The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure. The processing system may comprise a Diagnostic Assistant, which may comprise a loader and an event monitor. The loader may be configured to receive issue data indicative of a system anomaly or fault. In practical terms, this may occur when an operator or a user enters a problem report through a user interface, or when an automatic alert is generated by the system itself (for example, upon detecting abnormal network latency or unexpected process terminations). Upon receiving the issue data, the loader may be configured to process the issue data to determine corresponding diagnostic requirements, for example. Having established these diagnostic requirements, the loader may be further configured to identify the appropriate kernel-instrumenting bytecode data (kiBD). The loader may further be configured to select the most suitable kiBD based on the nature of the reported issue. Once the loader has identified the kiBD, it may be configured to proceed to load and activate it by linking the kiBD to a system hook using a kernel-level hooking mechanism. The event monitor may be configured to obtain the diagnostic data produced by the activated kiBD. In practice, kiBD modules may be configured to store or stream the collected kernel events (such as network traffic information, file-system calls, or system timestamps) to an accessible data structure, often referred to as a map or buffer. The event monitor may be configured to poll, subscribe to, or otherwise retrieve these events at defined intervals. Once the event monitor has gathered the diagnostic information, it may store or forward the data to a higher-level component (e.g., a dashboard or analytics module) for e.g., further processing or visualization. In some embodiments, the event monitor may also handle preprocessing steps, such as filtering out noise, aggregating repetitive events, or labeling data for subsequent anomaly detection routines.

The processing system may further comprise a kiBD map and a dashboard. The kiBD map may be configured to store diagnostic data obtained from the activated kiBD. For example, if a kernel-level hooking mechanism, such as an kiBD program, collects information about network packets, file accesses, or system calls, it may deposit these data points into a dedicated data structure (e.g., a hash map or an array map). The kiBD map may then be configured to organize this diagnostic data according to predefined identifiers, such as process ID, thread ID, timestamp, or network connection ID. By assigning unique keys, the processing system may efficiently retrieve specific records for detailed analysis or correlation with other event logs. Moreover, the map architecture may promote granular data segmentation, allowing operators or automated tools to filter, aggregate, or archive relevant data sets as needed. The dashboard may provide an intuitive graphical or tabular interface for viewing the diagnostic data retrieved from the kiBD map. By leveraging visualization techniques, e.g., such as charts, timelines, and heatmaps, the dashboard may transform raw system information into actionable insights, enabling a user to spot trends and anomalies more rapidly, for example. Additionally, the dashboard may support further analytical functions, including statistical evaluations, anomaly detection algorithms, and time-series analyses. Beyond mere visualization, the dashboard may also accommodate user interaction for configuring diagnostic parameters or filtering the displayed data. The user may, for example, set thresholds for triggering additional instrumentation, define time windows for historical event retrieval, or select specific system hooks to investigate in detail.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a method for obtaining diagnostic data in a distributed control system; and
Figure 2 shows a system for obtaining diagnostic data in a distributed control system.

The Figures are schematic only and not true to scale. In principle, identical or like parts, elements and/or steps are provided with identical or like reference numerals in the Figures.

### DETAILED DESCRIPTION OF THE INVENTION

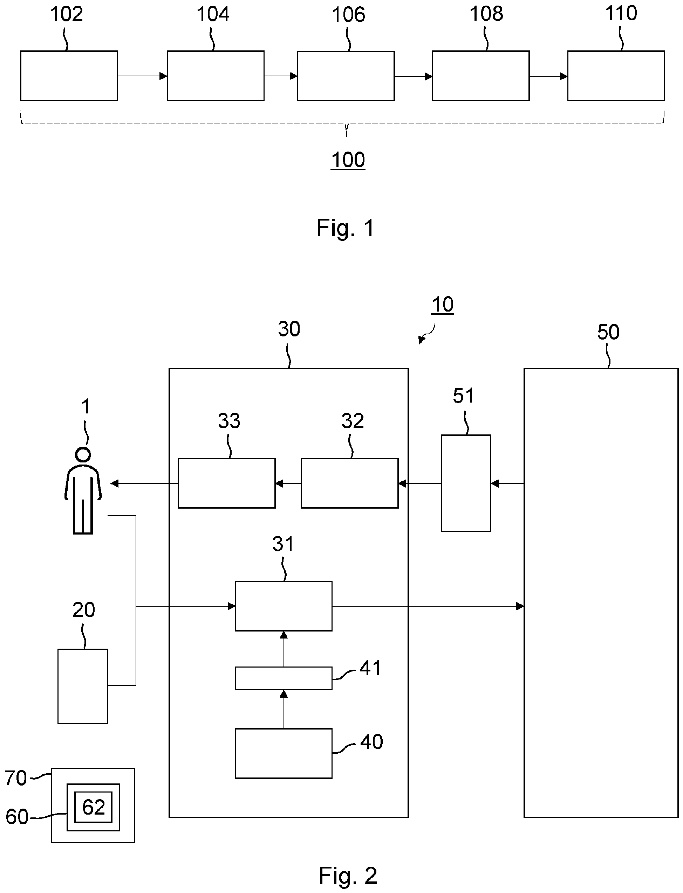

Figure 1 schematically shows a method for obtaining diagnostic data in a distributed control system.

In a first step 102, issue data is obtained, indicating that a system 10 anomaly or fault has occurred in the Distributed Control System (DCS). This issue data can originate from various sources, including system logs, real-time performance telemetry, security alerts, or manual reports e.g., from a user 1 or system operators. The issue data may describe events such as unexpected network behavior, process delays, high CPU usage, unauthorized file access, or abnormal system log entries. By collecting this initial data, a need for a targeted diagnostic process may be established.

In a second step 104, the obtained issue data is processed to determine specific diagnostic requirements. This may involve analyzing the nature of the detected anomaly and identifying which system components are involved, for example. The analysis may include pattern recognition, correlation with historical failure data, or rule-based filtering to distinguish significant anomalies from normal fluctuations. The result of this step may be a set of diagnostic parameters e.g., defining what type of information needs to be collected. For example, if the issue involves network communication failures, the diagnostic requirement may be to monitor OPC UA traffic and packet latency. If the anomaly relates to unexpected system restarts, the focus may shift to process execution timing and memory allocation patterns. This step may ensure that only relevant diagnostic requirements are captured, preventing unnecessary resource consumption.

In a third step 106, a kernel-instrumenting bytecode data (kiBD) is identified based on the determined diagnostic requirements. A predefined kiBD 41 storage 40 containing multiple diagnostic programs or kiBDs 41 specifically designed to monitor different system 10 behaviors may be queried. Each kiBD 41 may comprise kernel-level instrumentation code, for example implemented using eBPF (Extended Berkeley Packet Filters), which enables efficient system monitoring without modifying the operating system. The selection of the appropriate kiBD 41 may be based on predefined mappings between issue types and diagnostic tools or, in advanced implementations, driven by machine learning models that analyze issue data and suggest the most relevant kiBD 41, for example. For instance, if the system 10 may detect a high number of failed authentication attempts, the selected kiBD 41 may focus on monitoring user login events and access permissions. If the issue relates to latency in a control loop, the kiBD 41 may track real-time execution timing of PLC (Programmable Logic Controller) tasks, for example.

In a fourth step 108, the identified kiBD 41 is loaded and activated, enabling it to collect diagnostic data. For example, a loader module or loader 31 may dynamically load the kiBD 41 into a kernel execution environment 50, e.g., via system calls. Before execution, the kiBD may undergo a security verification process to ensure that it may be compatible with the running kernel and has not been altered or corrupted, for example. Further, the kiBD bytecode may be Just-In-Time (JIT) converted into native machine code for optimized execution performance. Once loaded, the kiBD is linked to specific system hooks that correspond to the required diagnostics. These system hooks may define which system-level events will trigger data collection.

For example, network-related kiBD 41 may attach to TCP/IP stack hooks to monitor network traffic. Process execution kiBD 41 may track CPU scheduling hooks to measure execution timing. Security-focused kiBD 41 may hook into file system events to detect unauthorized modifications. By attaching kiBD 41 to the relevant system hooks, the system 10 may ensure that only pertinent diagnostic events are recorded, preventing unnecessary performance overhead.

In a fifth step 110, the activated kiBD 41 collects diagnostic data based on system events. This diagnostic data may be temporarily stored it in an kiBD Map 51. This kiBD map 51 may be part of the kernel 50. An Event Monitor Component 32 may continuously retrieve this data, processing it into structured logs or statistical summaries, for example. The diagnostic data may e.g., comprise network packet metrics, CPU utilization trends, memory allocation patterns, or security-relevant file access attempts. The Event Monitor 32 then may forward the collected data to a Dashboard 33, where it may be visualized and analyzed by the user or system operators, for example. Depending on the implementation, the Dashboard 33 may e.g., apply automated filtering, anomaly detection algorithms, or machine learning-based classification to highlight potential root causes of the issue. In some cases, the system 10 may automatically trigger predefined response actions, such as sending alerts, recommending configuration changes, or temporarily blocking unauthorized processes.

In an optional final step 110, the kiBD may be deactivated and unloaded to free system resources. For example, once sufficient diagnostic data has been collected, the Loader module 31 may initiate the deactivation process, unlinking the kiBD 41 from the system hooks. The diagnostic program may be removed from the kernel, ensuring that it no longer consumes CPU, memory, or storage resources. The deactivation may occur in different ways. For example, automatically after a predefined duration (e.g., collecting diagnostic data for 60 seconds), or upon detection of diagnostic completeness (e.g., once enough data has been collected to pinpoint the issue), or manually by an operator (e.g., after reviewing the diagnostic results). By unloading the kiBD 41 after diagnostics are complete, the system 10 may ensure minimal impact on ongoing operations while still providing detailed insights into system anomalies.

Figure 2 schematically shows a system 10 for obtaining diagnostic data in a distributed control system (DCS). The system 10 comprises several components, including a System Management 20 / User 1, a Diagnostics Assistant 30 and a Kernel environment 50.

The System Management 20 / User 1 may represent an operator, administrator, or automated monitoring services responsible for initiating diagnostic procedures, for example. The process may begin when an anomaly or fault is detected in the DCS. This issue may arise from system logs, performance deviations, security alerts, or user-reported malfunctions. Upon detecting an issue, the System Management 20 / User 1 may trigger a diagnostic request, which is forwarded to the Diagnostics Assistant 30 for further processing.

The Diagnostics Assistant may be responsible for handling diagnostic requests and executing the appropriate kernel-level instrumentation. It may comprise several components. A Loader 31 may receive the diagnostic request and processes the reported issue to determine the necessary diagnostic requirements, for example. Based on this analysis, the Loader 31 may query a kiBD Storage 40, a repository of predefined kernel-instrumenting bytecode data (kiBD) 41 programs. The Loader 31 may then select the most appropriate kiBD 41 to diagnose the reported issue. For example, if the anomaly is related to network performance, the Loader 31 may choose a kiBD 41 for monitoring OPC UA traffic. Once the selection is complete, the Loader 31 may dynamically load the kiBD 41 into the kernel 50 via a system call.

The kiBD Storage 40 may comprise predefined diagnostic programs tailored for different types of system anomalies in a DCS environment. The kiBD 41 programs may e.g., be configured to monitor specific system behaviors, such as CPU load, memory usage, network traffic, process execution, or security events. These kiBD 41 programs may be structured in a two-part architecture, comprising a kernel-space component (which collects raw system data) and a user-space component (which processes and visualizes the data).

Once a kiBD 41 is activated, it may be linked to system hooks in the kernel 50 and begins collecting diagnostic data. An Event Monitor 32 may continuously retrieve and process the recorded system events, which may be temporarily stored in a kiBD Map 51, a kernel-managed buffer for diagnostic data. The Event Monitor 32 may ensure that only relevant events are captured, reducing unnecessary overhead.

Data from the kiBD Map 51 may then transferred to the Dashboard 33 for further analysis. The Dashboard 33 may serve as visualization and analysis interface. It may present collected diagnostic data e.g., in the form of graphs, tables, logs, and alerts, allowing a user 1 to inspect system behavior and identify potential issues, for example. The Dashboard 51 may also apply predefined algorithms (e.g., statistical analysis, anomaly detection, or machine learning-based event correlation) to automatically filter and highlight critical diagnostic patterns, for example.

The kernel 50 may be the execution environment where the kiBD 41 programs operate. Once a kiBD 41 is loaded, it may be linked to specific system hooks, such as:
- Network hooks (to monitor OPC UA traffic, TCP/IP activity)
- File system hooks (to track unauthorized file access)
- Process execution hooks (to monitor CPU-intensive tasks)

The kiBD Map may be a kernel-managed data buffer where recorded diagnostic data is temporarily stored before being processed by the Event Monitor. Data may be stored using identifiers such as process IDs, thread IDs, timestamps, or network session IDs. The Event Monitor may periodically retrieve data from the kiBD Map 51, processes it, and forwards it to the Dashboard 33.

Once sufficient diagnostic data has been collected, the Diagnostics Assistant 30 may initiate a deactivation process. The Loader 31 may remove the active kiBD 41 programs from the kernel 50, ensuring that the system 10 returns to its normal operating state. Thus, the Diagnostics Assistant 30 may be configured to dynamically activate and deactivate kiBD 41 to collect detailed diagnostic data while minimizing system overhead. This may prevent for unnecessary resource consumption, ensuring that the CPU, memory, and storage are not burdened by prolonged diagnostics, for example.

A data processing system 70, which may comprise one or more data processing apparatuses 60, e.g., computers. The data processing system 70, in particular the data processing apparatus 60, in particular its processor 32, may be used to carry out the method 100 for obtaining diagnostic data in a distributed control system. The exemplary data processing apparatus 60 comprises at least one processing unit or processor 32, e.g., a CPU, and at least one computer program product, e.g., in the form of a computer-readable storage medium. Computer programs are stored on the computer program products.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (100) for obtaining diagnostic data in a distributed control system, DCS, the method comprising:
- (S 102) obtaining issue data, wherein the issue data is indicative of a system anomaly or fault;
- (S 104) processing the obtained issue data to determine diagnostic requirements;
- (S 106) identifying a kernel-instrumenting bytecode data, kiBD (41), based on the determined diagnostic requirements;
- (S 108) loading and activating the identified kiBD (41), wherein activation comprises linking the kiBD (41) to a system hook; and
- (S 110) obtaining diagnostic data using the activated kiBD (41).

2. The method (100) of claim 1, wherein loading and activating the identified kiBD (41) comprises verifying the integrity and compatibility of the kiBD (41).

3. The method (100) of claim 1 or 2, wherein the kiBD (41) is just-in-time, JIT, compilated prior to being linked to the system hook.

4. The method (100) of any one of the previous claims, wherein the kiBD (41) is selectively linked to system hooks that are relevant to the identified diagnostic requirements.

5. The method (100) of any one of the previous claims, further comprising storing the obtained diagnostic data in a kiBD map (51).

6. The method (100) of claim 5, wherein the kiBD map (51) is keyed by one or more identifiers, wherein the identifiers are at least one or more of process ID, thread ID, timestamp, or network connection ID.

7. The method (100) of claim 5, further comprising analyzing the obtained diagnostic data using predefined algorithms.

8. The method (100) of any one of the previous claims, wherein the method (100) is automatically initiated in response to detecting a system anomaly or upon receiving a system-generated alert.

9. The method (100) of any one of the previous claims, further comprising deactivating and unloading the kiBD (41) after obtaining the diagnostic data.

10. The method (100) of claim 9, wherein deactivating and unloading the kiBD (41) is triggered automatically after a predetermined time period, or upon completion of the diagnostic process, or after receiving a manual user request.

11. The method (100) of any one of the previous claims, wherein identifying the kiBD (41) based on the diagnostic requirements is performed using a machine learning model.

12. The method (100) of any one of the previous claims, further comprising linking a user-space component of the kiBD (41) to at least one user application in the DCS.

13. The method (100) of any one of the previous claims, further comprising enforcing one or more security policies derived from IEC 62443 guidelines by means of the activated kiBD (41).

14. One or more computer program products (62) comprising instructions which, when executed by one or more data processing apparatuses (60), cause the one or more data processing apparatuses (60) to carry out the method (100) of any one of the previous claims.

15. A data processing system (70) configured to carry out the method (100) of any one of claims 1 to 13.
